# EUROPEAN PATENT SPECIFICATION

(11) **EP 0 320 031 B1**
(45) Date of publication and mention of the grant of the patent: **03.02.1993**
(21) Application number: 88202534.9
(22) Date of filing: 14.11.1988
(51) Int. Cl.: B65G 1/06, B65G 25/02

(54) **Shop rack**
Ladenregal
Etagère

(30) Priority: 13.11.1987 NL 8702725
(43) Date of publication of application: 14.06.1989
(60) Divisional application: 92200169.8
(73) Proprietor: ALBERT HEIJN B.V., NL-1506 CK Zaandam (NL)
(72) Inventor: Borghuis, Jan, NL-7461 Rijssen (NL)
(74) Representative: Smulders, Theodorus A.H.J., Ir.

(56) References cited:
- FR-A- 1 288 955
- FR-A- 2 092 826
- GB-A- 2 185 457
- US-A- 3 048 258
- US-A- 3 221 870
- US-A- 3 881 633

## Description

This invention relates to a shop rack comprising a plurality of shelves, on which goods can be displayed, and a frame supporting the shelves.

Racks of this kind are well known and are frequently being used in self-service shops. The goods are mostly packaged in jars, bags, cartons and the like, and placed in rows one behind the other. This means that, for example, one or more rows of bags of crystal sugar are arranged transversely to the longitudinal direction of a shelf. Next to the bags of sugar, for example, one or more rows of boxes of sugar lumps may be placed, etc.. The shopping public can then take the foremost bag of sugar, or box or sugar lumps etc. and put it in a trolley.

GB-A-2185457 discloses cold store provided with an apparatus for conveying packages of foodstuff through the cold store. The apparatus comprises several floor arranged one above the other, with each floor being defined by walking beam or pusher conveyors for conveying the packages in mutually spaced relationship.

In a self-service shop, in order to ensure a well-arranged and ordered display of goods, it is the practice for the shop attendants regularly to push forward the rows of products, which rows have become shortened owing to the removal of the foremost products. The racks thus remain filled as much as possible at the front side facing the public and interspaces between products in a row are avoided. Pushing the products placed on a shelf of a shop rack forwardly in the manner described is called "trimming".

Such trimming is a highly labour-intensive and often tiring work, in particular in the case of low-level shelves and in the case of high and/or relatively deep shelves.

There is accordingly a need for a possibility of automating this work.

It is an object of the present invention to meet this need. To this effect, according to the invention, a shop rack of the above kind wherein at least a part of at least one shelf is provided with conveying means for conveying articles placed on the shelf to the front of the shelf, is characterized in that at least a portion of a shelf comprises a wire lattice with longitudinal wires extending in the direction of transport and cross-wires extending transversely thereto, and that studs arranged on carrier members located below the wire lattice are provided, which are mounted in line with the openings in the wire lattice and can be moved relatively to the wire lattice into a low rest position and into a high transporting position, in which the top surface of the studs is at least as high as the top surface of the wire lattice, and wherein the studs can move relatively to the wire lattice in the direction of transport and the opposite direction, respectively, in the high and the low position, respectively.

It is noted that it has been tried in the past to achieve the effect contemplated by means of shelves inclined downardly to the front. As soon as the foremost product of a row of products is removed, the remaining row of products slides forwardly by gravity. One disadvantage of that solution is that the shelves should be placed at rather a steep angle to ensure that the products of a row slide forwardly in the manner contemplated under all conditions. In the case of fragile products, for example, glass jars, damage may accur. Also, with that arrangement, the public has no time to return a product removed from the shelf.

One embodiment of the invention will now be described, by way of example, with reference to the accompanying drawings, in which
Fig. 1 diagrammatically and generally illustrates a method of conveying goods to the front of a shelf;
Figs. 2 and 3 show two variants of the method of Fig. 1;
Fig. 4 diagrammatically shows, in cross-sectional view, a shelf provided with a conveyor for a shop rack according to the present invention in a number of successive conditions;
Fig. 5 shows the shelf of Fig. 4 diagrammatically in top plan view;
Fig. 6 is a diagrammatic side-elevational view, showing one example of a practical embodiment of a shop rack according to the invention;
Fig. 7 shows a detail of Fig. 6 on a larger scale;
Fig. 8 shows a detail of Fig. 7;
Fig. 9 shows an example of a studded strip for use in a rack according to the invention; and
Fig. 10 shows a modification of an embodiment of the present invention.

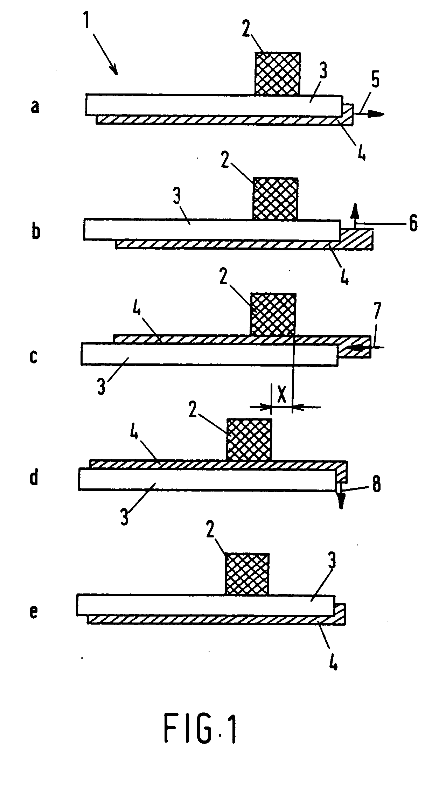

Fig. 1 diagrammatically and generally illustrates a method of displacing goods placed in a shop rack in a desired direction, i.e., towards the side adjoining the passageway for the public, as used in the present invention.

Fig. 1 is a diagrammatic side-elevational view, showing a shelf 1 of a shop rack, on which an article 2 has been placed. The shelf is comprised of two interengaging parts 3 and 4. The parts 3 and 4 can be moved relatively to each other in a manner to be described hereinafter and by means to be described hereinafter. Fig. 1 shows at a-e five positions which the shelf sections and an article to be displaced can occupy.

In the rest position shown in Fig. 1a the article 2 is supported by the first shelf section 3. This, for example, may be a carrier comprised of slats, such as strips, mounted in side-by-side, spaced parallel relationship. The second shelf section 4 may be built up in a similar way, with the slats disposed in the interspaces between the slats of shelf section 3.

In the example shown in Fig. 1, the first shelf section is stationary, and the second is at a slightly lower level than the first. This, however, is not essential. To displace an article 2 or a row of such articles to the front of the shop rack (in the example shown: to the left), the second shelf section 4 is moved to the rear (i.e., to the right in Fig. 1), as indicated by an arrow 5. If the shelf sections have co-planar upper surfaces in the rest position, the second shelf section is preferably first moved downwardly somewhat. In certain conditions, specifically when there is lower friction between the second shelf section and the article 2 than there is between the stationary first shelf section and the article 2, it is in principle unnecessary for the second shelf section to be first moved downwards.

The first intermediate position, reached from the initial position shown in Fig. 1a by shifting the second shelf section backwards is shown in Fig. 1b. The next step is an upward movement of the second shelf section, as indicated by an arrow 6.

Owing to this upward movement, the second intermediate position, shown in Fig. 1c, is reached. The article 2 is now no longer supported by the stationary first shelf section 3, but by the second shelf section 4.

Subsequently, the second shelf section is moved forwardly, i.e., to the left in Fig. 1, as indicated by an arrow 7 in Fig. 1c. During this movement, the second shelf section takes along the article 2 over a pre-determined distance, so that the position shown in Fig. 1d is reached.

Finally, the second shelf section is again moved downwards as indicated by an arrow 8 in Fig. 1d, to reach the condition shown in Fig. 1e, in which the article 2 is again supported by the stationary first shelf section.

Fig. 1e corresponds essentially to Fig. 1a, with the difference that the article 2 has been transported forwardly through a distance X.

After a number of such transport cycles, the article or the row of articles is in the desired position, with the rack being entirely filled at the front.

Naturally, a raised edge or the like is provided at the front to prevent the articles from falling out of the rack.

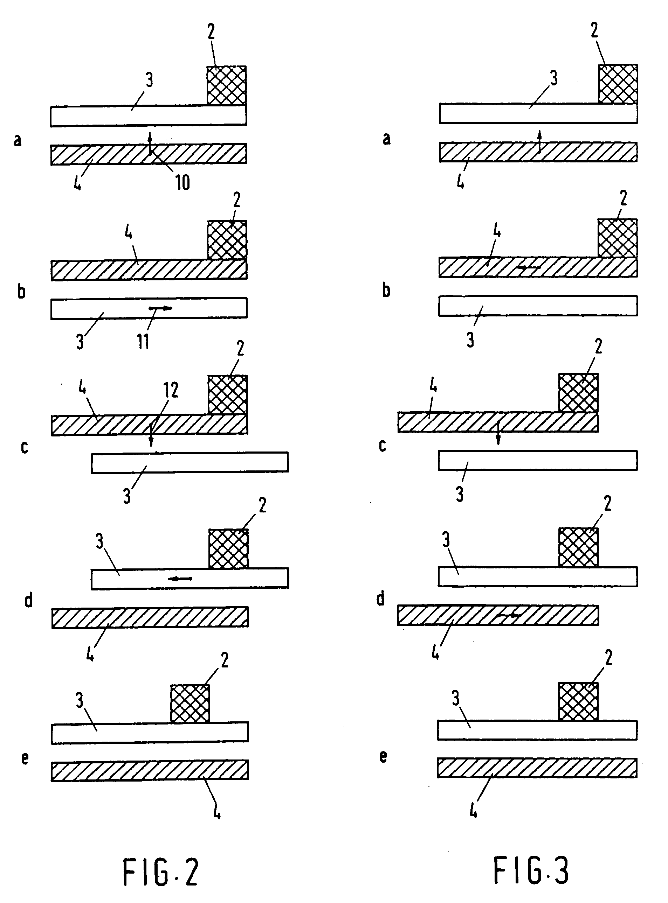

Fig. 2 illustrates a variant of the technique shown in Fig. 1. As shown in Fig. 2, the article 2 is supported in the rest position on the first shelf section 3. The second shelf section 4 is then subjacent to (or at the same level as) the first shelf section.

To transport the article 2, the second shelf section is moved upwards (arrow 10) thereby taking over article 2. Next the first shelf section 3 is moved backwards (arrow 11). Thereafter the second shelf section moves downwards again (arrow 12) until the article is again supported by the first shelf section, as shown in Fig. 2d. Thereafter the first shelf section moves forward again, i.e., to the starting position, as indicated by an arrow 13, until the condition shown in Fig. 2e is reached.

According to the variant shown in Fig. 3, the second shelf section moves upward from a low position, thereby lifting the article off the first shelf section. Subsequently, the second shelf section moves forward and then downwards until the article is back on the first shelf section 3. Finally, the second shelf section moves back into the starting position (Fig. 3e).

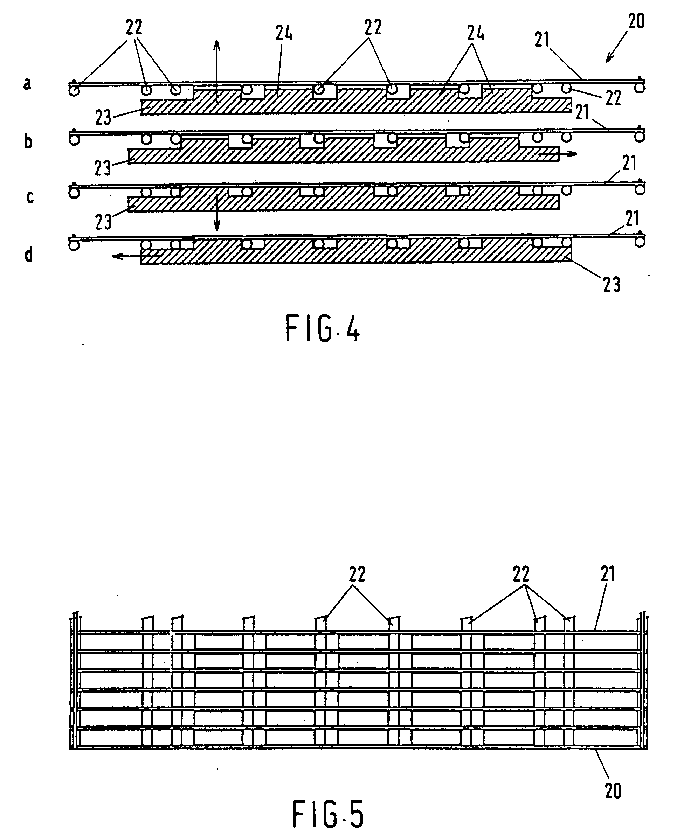

Figs. 4 and 5 diagrammatically show an example of a conveyor system for use in a shop rack according to the present invention, which operates in the manner described above. In the example shown in Figs. 4 and 5, the supporting surface of the shelf of a shop rack consists of a wire lattice 20 with longitudinal wires 21 and transverse wires or cross-wires 22. The longitudinal wires extend in the direction of transport, i.e., transversely relative to the longitudinal direction of the shelf, and the cross-wires extend transversely to the direction of transport.

Furthermore, there is shown a carrier 23 provided with studs 24. The carrier is arranged just below the wire lattice in such a manner that the studs 24 can extend through the meshes of the wire lattice. Furthermore, the length of each mesh of the wire lattice, as viewed in the direction of the longitudinal wires 21, exceeds the corresponding dimension of studs 24.

Fig. 4 shows, in steps a-d, the manner in which a row, not shown, of articles placed on the shelf can be moved to the left. Variants similar to those described with reference to Figs. 1-3 are possible.

Fig. 5 shows in top plan view diagrammatically a portion of a shelf as illustrated in Fig. 4 in the situation shown in Fig. 4a or 4b.

It is noted that the lattice may alternatively be made of horizontally and/or vertically disposed strips, in combination with wire or rod material, or otherwise.

The studs may be formed integrally with a substantially imperforate carrier, as shown, but may alternatively be separate members mounted on a carrier, each forming one or more studs. The carrier of the studs may be formed as a wire lattice, a lattice of strips, or the like, to which studs made of a suitable material, e.g., plastics, are secured.

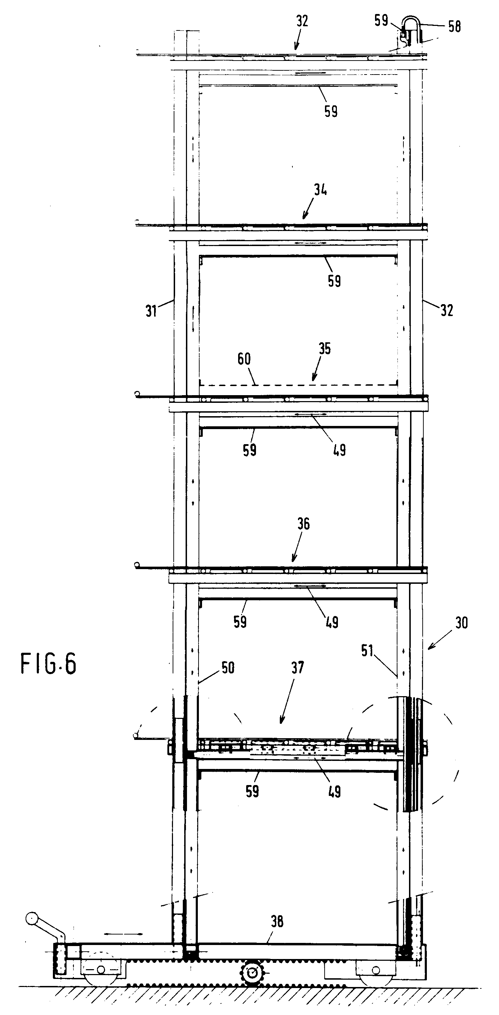

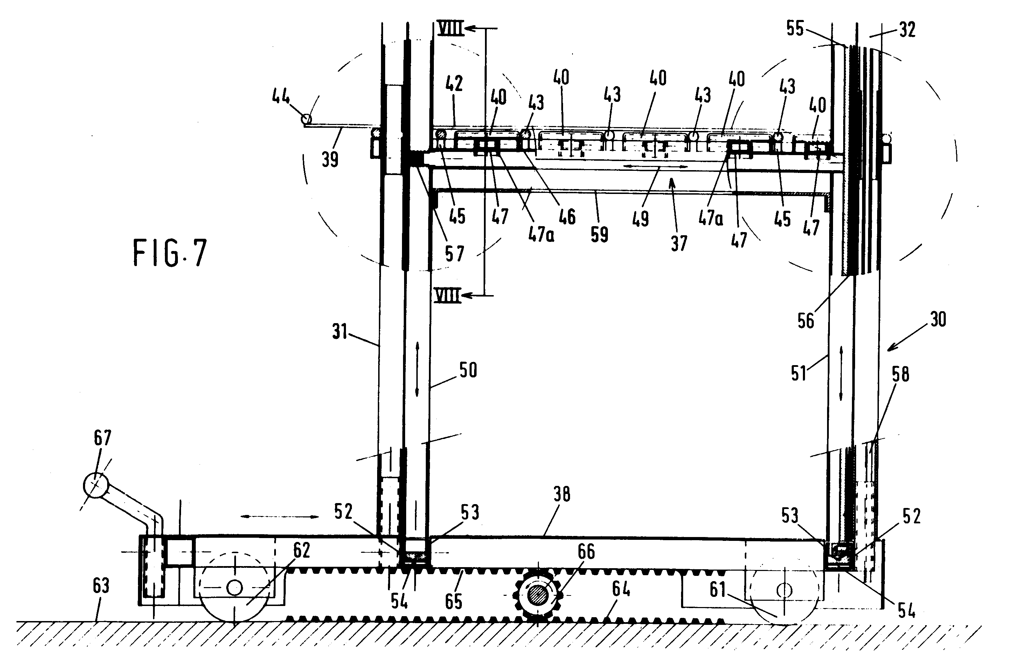

Fig. 6 diagrammatically shows in side-elevational view an example of a shop rack according to the invention, and Fig. 7 shows, on a larger scale, the lower portion of Fig. 6. The rack shown comprises a frame 30 with front uprights 31 and rear uprights 32. The rear uprights may constitute part of a closed rear wall. It is also possible to use a self-supporting closed rear wall. In the two latter cases, however, it is not possible to replenish the rack from the back.

There are further shown five shelves 33,34,35,36 and 37, and a bottom plate 38. In the example shown, the shelves are all of the self-trimming type. If desired, the bottom plate 38 may be of the self-trimming type as well.

In this example, the shelves shown are built up, in accordance with the principle shown in Figs. 4 and 5, of a lattice 39 and a carrier 41 provided with studs 40. In this example, the transporting movement, similarly to the arrangement shown in Figs. 4 and 5, is fully carried out by the studded carrier, while the lattice 39, which in this example is a wire lattice built up from longitudinal wires 42 and cross-wires 43, is stationary.

In this example, the wire lattice is formed so that the longitudinal wires 42 constitute the supporting surface for the products, while the cross-wires 43 are located under the longitudinal wires and support these. The cross-wires themselves, at least some of them, are carried by supporting blocks 45, which, in turn, are secured to frame members, not shown, fixedly connected to uprights 31,32.

In this example, the wire lattice 39 extends at the front beyond the front upright 31, and is provided with a stop 44 to prevent the products from falling off the shelf. In the example shown, the stop is a cross-wire provided on the longitudinal wires, but other forms are possible. The required height of the stop depends on the shape of the products and on the size of the vertical stroke of the conveyor mechanism.

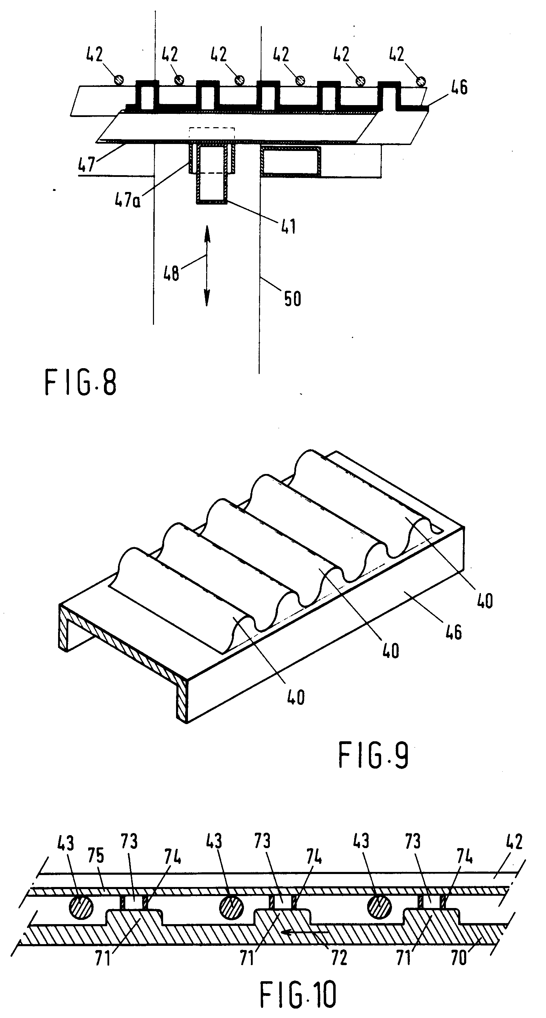

Advantageously, the lattice of studs is built up from a plurality of studded strips, which extend in the longitudinal direction of the rack, i.e., across the direction of transport. Such a studded strip is shown in Fig. 7 at 46 in cross-sectional view, and in Fig. 8 in longitudinal sectional view. In the example shown, the studded strips have somewhat elongated studs, as viewed in the direction of movement, which as shown in Fig. 8 may be of angular castellated form, but alternatively may have a more rounded form.

Fig. 9 shows, in perspective view, an example of a suitable studded strip.

It is noted that, in principle, each elongated stud could be sub-divided into one or more smaller studs.

Advantageously, the studded strips are moulded plastics strips, each carried by a metal section. In the example shown, a channel section 47 has been used. The channel sections 47 each rest on two or more carriers 41, extending between a front and a rear upright of the rack, which in the example shown consist of a vertical rectangular metal section. The channel sections 47 are coupled by means of draggers 47a to carriers 41, as shown in Fig. 8. Carriers 41 are vertically movable up and down in a manner to be described hereinafter, and are also reciprocatable in the longitudinal direction, as indicated by arrows 48 (Fig. 8) and 49 (Figs. 6 and 7).

The movements of the moving parts of the shelves, required for trimming the articles placed on the shelves can be accomplished in various ways. It is possible for the moving parts of a shelf to be driven, starting from a rotary movement, generated in one of the manners known for the purpose, by means of eccentric transmission. It is also possible to effect a reciprocating movement directly by means of well-known hydraulic, pneumatic, electric or electromagnetic elements.

In addition, it is possible for each shelf or a section thereof to be driven separately, or for all the shelves of a rack, or even a plurality of racks to be driven simultaneously.

The driving mechanism shown diagrammatically in Figs. 6 and 7 uses pneumatic tubes for causing the required movements of the movable part of the shelves, in this example the studded carriers. In addition, in this example, the rack is arranged so that all shelves of the rack are operated simultaneously.

For this purpose, a pair of uprights 50,51, made of hollow tube, is arranged for up and down movement next to, or between, at least two pairs of fixed uprights 31,32. Uprights 50,51 are slidably coupled with the fixed uprights in a manner not shown. The movable uprights 50,51 each rest on a lift strip 52, located in a horizontal rectangular or U-shaped section 53, which in this example extends in the longitudinal direction of the rack.

Under the lift strip 52, within section 53, is a pneumatic tube 54, coupled to a source of compressed air in a manner not shown.

When pressure is applied to tubes 54, the tubes expand, and as a result the uprights 50,51 move upwards, thereby taking along the carriers 41 connected to uprights 50,51. Lattice 39 is connected to the fixed uprights 31,32, and consequently does not move upwards. With a proper setting, the result of the rising movement is a situation as shown in Fig. 4b, in which the studs just project above the lattice and (temporarily) have taken over the carrying function of the lattice.

As shown by Fig. 4, after the upward movement a horizontal movement is required. To effect this horizontal movement, in this example, a vertical pushing strip 55 is provided in the rear movable uprights 51. The vertical pushing strip has a surface facing the front of the rack, which is in contact with the ends of carriers 41. If the carriers 41 are platforms or the like, rather than sections, suitable projections are provided.

The rear ends of carriers 41 extend through openings in the wall of the movable uprights 51 into said uprights. Similarly, the front ends of carriers 41 extend into the front movable uprights 50.

Disposed behind the vertical pushing strip 55 is a pneumatic hose 56, arranged within the hollow movable uprights 51, which hose expands under pressure and then pushes the pushing strip forwardly. The carriers 41 are slidable in openings in the movable uprights 50,51.

After the horizontal pneumatic hoses have been energized, the vertical pneumatic hoses are energized. Subsequently, the horizontal hoses are released, as a result of which the movable uprights with the stud carriers move downwardly by gravity. Thereafter the vertical hoses are released. For the backward movement of the stud carriers, corresponding pneumatic hoses could be used in the front movable uprights 50. Preferably, however, a resetting spring is used, which in this example is the compression spring 57 arranged between the end of the carriers 41 extending into the front uprights, and the inner wall of these uprights.

Shown at 58 is a connecting hose for the vertical pushing hose 56. The connecting hose 58, in this example, extends through the fixed rear upright 32, and is coupled to pushing hose 56 at 59 at the top of the rack.

The front and rear movable uprights are preferably interconnected with a connector 59 at least at some shelves. In the drawings, the connectors are shown below the level of the shelves. Advantageously, however, the connectors are arranged just above the level of the shelves, as shown in Fig. 6 in ghost outline at 60. The connectors can then also serve as guides for the articles to be conveyed on the shelves and prevent the articles to be conveyed from catching behind an upright.

Shop racks of the kind described, in which the products are transported from the rear forwardly are excellently suitable for being loaded from the rear. For this purpose, the rear of the rack is preferably of open construction or one that can be opened in a simple manner. Furthermore, the racks should be accessible at the rear. This latter is often not the case, because the racks are often arranged against a wall or back-to-back with other racks.

For this reason, a shop rack according to the invention is preferably of mobile construction, as shown in Figs. 6 and 7. Wheels 61 and 62 travel over shop floor 63. In the example shown, a toothed rack 64,65 is provided on the shop floor and on the bottom of the rack, respectively. Arranged between, and meshing with, the toothed racks is a pinion 66, which for example can be driven by means of a motor or manually through an operating rod. The toothed racks may be toothed plastics strips.

A guide rod 67 for trolleys and the like is shown at the front of the rack.

It is noted that, after reading the foregoing, various modifications will readily occur to one skilled in the art. Thus, for example, thin strips may be arranged between the top face of a series of studs and the bottom of the products, which strips are located between the longitudinal wires 42 of the wire lattice above the cross-wires. Such strips are then thinner than the longitudinal wires 42 and consequently carry the products only during a conveying stroke. The strips render it possible to use fewer and/or smaller studs, so that, for example, it is not necessary for a studded strip to be arranged under the foremost part of a shelf. Such strips may be arranged to lie loosely, but are preferably connected to the stud at a plurality of points, for example, by means of a nesting clamping connection. An example is shown diagrammatically in Fig. 10.

Fig. 10 shows a studded platform 70 with studs 71. Arranged between the studs are, again, cross-wires 43 of a lattice 39. Furthermore, part of a longitudinal wire 42 of the lattice is visible. The direction of transport is indicated by an arrow 72. Some of the studs are provided with a projection 73, which fits within or around a projection 74, of complementary shape, provided at the bottom of a thin strip 75, for example of plastics, located on the transverse wires.

A shop rack according to this invention can be equipped with means, such as light-sensitive elements and appurtenant light sources, by means of which it can be detected whether there are any products on the front part of a shelf. If not, depending on the design of the rack, the conveyor system can be energized (automatically) for the rack in question, or any part thereof, or all shelves of the rack.

## Claims

1. A shop rack comprising a plurality of shelves (20; 33-38) on which articles (2) can be displayed, and a frame (30) supporting said shelves, wherein at least a portion of at least one shelf is provided with conveyor means capable of transporting articles placed on the shelf to the front of the shelf, said at least one portion of at least one shelf comprising a wire lattice (20; 39) with longitudinal wires (21; 42) extending in the direction of transport and cross-wires (22; 43) extending transversely thereto, and wherein studs (24; 40; 71) arranged on carrier members (23; 41) located below the wire lattice (20; 39) are provided, which are mounted in line with the openings in the wire lattice and can be moved relatively to the wire lattice (20; 39) into a low rest position and into a high transporting position, in which the top surface of the studs is at least as high as the top surface of the wire lattice (20; 39), and wherein the studs can move relatively to the wire lattice (20; 39) in the direction of transport and the opposite direction, respectively, in the high and the low position, respectively.

2. A shop rack as claimed in claim 1, characterized in that the wire lattice (20; 39) is a fixedly mounted, stationary lattice.

3. A shop rack as claimed in claim 1 or 2, characterized in that the studs (24; 40; 71) are arranged on a movable platform (70) coupled with drive means (50-56).

4. A shop rack as claimed in any of claims 1-3, characterized by studded strips (46) extending transversely to the direction of transport and carried by carrier sections (47) also extending transversely to the direction of transport.

5. A shop rack as claimed in claim 4, characterized in that the carrier sections (47) each rest on at least two spaced elongated carriers (41) extending in the direction of transport, said carriers being coupled with drive means (50-56).

6. A shop rack as claimed in any of claims 1-5, characterized in that the longitudinal wires (21; 42) of the wire lattice (20; 39) are located on the cross-wires (22; 43) and that thin strips (75) are arranged between the longitudinal wires (21; 42), with a thickness less than that of the longitudinal wires, which strips (75) can be raised and shifted relatively to the wire lattice (20; 39), by the studs (24; 40; 71).

7. A shop rack as claimed in claim 6, characterized in that the strips (75) are each fixedly connected to one or more studs (24; 40; 71).

8. A shop rack as claimed in claim 7, characterized in that the strips (75) and at least some of the studs (24; 40; 71) have juxtaposed means (73,74) fitting one into the other to effect a nesting connection between the strips and the studs concerned.

## Patentansprüche

1. Ladenregal mit mehreren Fächern (20;33-38), in denen Artikel (2) ausgestellt werden können, und einem die Fächer haltenden Rahmen (30), wobei mindestens ein Teil mindestens eines Faches mit einer Fördereinrichtung versehen ist, die imstande ist zum Transportieren von in dem Fach plazierten Artikeln zur Vorderseite des Faches, wobei der mindestens eine Teil des mindestens einen Faches ein Drahtgitter (20;39) mit sich in Transportrichtung erstreckenden längsverlaufenden Drähten (21;42) und mit sich quer dazu erstreckenden Querdrähten (22;43) aufweist, und wobei Vorsprünge (24;40;71) vorgesehen sind, die an unterhalb des Drahtgitters (20;39) befindlichen Trägerteilen (23;41) angeordnet sind, und die mit den Öffnungen in dem Drahtgitter ausgerichtet sind und relativ zu dem Drahtgitter (20;39) in eine niedrige Ruheposition und eine hohe Transportposition bewegt werden können, in der die obere Fläche der Vorsprünge mindestens so hoch ist wie die obere Fläche des Drahtgitters (20;39), und wobei die Vorsprünge sich in der hohen und der niedrigen Position relativ zu dem Drahtgitter (20;39) in Transportrichtung bzw. der Gegenrichtung bewegen können.

2. Ladenregal nach Anspruch 1, dadurch gekennzeichnet, daß das Drahtgitter (20;39) ein fest montiertes, stationäres Gitter ist.

3. Ladenregal nach Anspruch 1 oder 2, dadurch gekennzeichnet, daß die Vorsprünge (24;40;71) auf einer mit Antriebseinrichtungen (50-56) gekoppelten bewegbaren Plattform (70) angeordnet sind.

4. Ladenregal nach einem der Ansprüche 1-3, gekennzeichnet durch mit Erhebungen versehenene Streifen (46), die sich quer zur Transportrichtung erstrecken und von sich ebenfalls quer zur Transportrichtung erstreckenden Trägerabschnitten (47) getragen sind.

5. Ladenregal nach Anspruch 4, dadurch gekennzeichnet, daß die Trägerabschnitte (47) jeweils auf mindestens zwei beabstandeten länglichen Trägern (41) aufliegen, die sich in Transportrichtung erstrecken, wobei die Träger mit Antriebseinrichtungen (50-56) gekoppelt sind.

6. Ladenregal nach einem der Ansprüche 1-5, dadurch gekennzeichnet, daß die längsverlaufenden Drähte (21;42) des Drahtgitters (20;39) auf den Querdrähten (22;43) angeordnet sind und daß zwischen den längsverlaufenden Drähten (21;42) dünne Streifen (75) angeordnet sind, deren Dicke geringer ist als diejenige der längsverlaufenden Drähte, wobei die Streifen (75) durch die Vorsprünge (24;40;71) relativ zu dem Drahtgitter (20;39) angehoben und versetzt werden können.

7. Ladenregal nach Anspruch 6, dadurch gekennzeichnet, daß die Streifen (75) fest mit einem oder mehreren Vorsprüngen (24;40;71) verbunden sind.

8. Ladenregal nach Anspruch 7, dadurch gekennzeichnet, daß die Streifen (75) und mindestens einige der Vorsprünge (24;40;71) nebeneinander angeordnete Einrichtungen (73,74) aufweisen, die zur Bildung einer Eingreifverbindung zwischen den betreffenden Streifen und Vorsprüngen ineinander passen.

## Revendications

1. Un présentoir de magasin constitué d'une pluralité de rayons (20; 33-38) sur lesquels des articles (2) peuvent être exposés et' d'un châssis (30) supportant lesdits rayons, dans lequel au moins une partie d'au moins un rayon est pourvue d'un moyen de convoyage capable de transporter des articles placés sur le rayon vers l'avant du rayon, ladite au moins une partie d'au moins un rayon étant constituée d'un réseau de fils métalliques (20; 39) avec des fils longitudinaux (21; 42) qui s'étendent dans le sens du transport, et des fils transversaux (22; 43) qui s'étendent dans le sens transversal au transport, et dans lequel on met des pions (24; 40; 71) disposés sur des éléments de convoyeur (23; 41), en-dessous du réseau de fils métalliques (20; 39), dans l'alignement des ouvertures dans le réseau de fils, et qui peuvent être déplacés par rapport au réseau de fils (20; 39) vers une position basse de repos et vers une position haute de transport dans laquelle la surface supérieure des pions est au moins aussi élevée que la surface supérieure du réseau de fils (20; 39), et dans lequel les pions peuvent se déplacer par rapport au réseau de fils (20; 39) respectivement dans le sens du transport et dans le sens opposé, respectivement en position haute et en position basse.

2. Un présentoir de magasin selon la revendication 1, caractérisé en ce que le réseau de fils métalliques (20; 39) est un réseau non déplaçable, monté de façon fixe.

3. Un présentoir de magasin selon la revendication 1 ou 2, caractérisé en ce que les pions (24; 40; 71) sont disposés sur une plateforme (70) déplaçable, couplée à des moyens d'entraînement (50-56).

4. Un présentoir de magasin suivant l'une quelconque des revendications 1 à 3, caractérisé par des bandes munies de pions (46) s'étendant transversalement à la direction de transport, et portées par des parties de convoyeur (47) s'étendant aussi transversalement à la direction de transport.

5. Un présentoir de magasin selon la revendication 4, caractérisé en ce que les parties de convoyeur (47) s'appuient chacune sur au moins deux convoyeurs (41) allongés et espacés, s'étendant dans la direction de transport, lesdits convoyeurs étant couplés aux moyens d'entraînement (50-56).

6. Un présentoir de magasin suivant l'une quelconque des revendications 1 à 5, caractérisé en ce que les fils métalliques longitudinaux (21; 42) du réseau de fils (20; 39) sont situés sur les fils transversaux (22; 43) et en ce que des bandes minces (75) sont placées entre les fils longitudinaux (21; 42) avec une épaisseur inférieure à celle des fils longitudinaux, bandes (75) qui peuvent être soulevées et décalées par rapport au réseau de fils (20; 39) par les pions (24; 40; 71).

7. Un présentoir de magasin selon la revendication 6, caractérisé en ce que les bandes (75) sont chacune reliées de façon fixe à un ou plusieurs pions (24; 40; 71).

8. Un présentoir de magasin selon la revendication 7, caractérisé en ce que les bandes (75) et au moins certains des pions (24; 40; 71) comportent des moyens juxtaposés (73, 74) s'ajustant l'un dans l'autre pour réaliser une liaison emboîtée entre les bandes et les pions concernés.
